# FASCICULE DE BREVET EUROPEEN

(11) **EP 3 865 901 B1**
(45) Date de publication et mention de la délivrance du brevet: **15.10.2025**
(21) Numéro de dépôt: 21155052.0
(22) Date de dépôt: 03.02.2021
(51) Int. Cl.: G01S 7/481, G01S 7/4863, G01S 7/4865, G01S 7/4914, G01S 7/4915, G01S 17/08

(54) **DISPOSITIF DE SYNCHRONISATION,CAPTEUR DE TEMPS DE VOL ET PROCÉDÉ ASSOCIÉS**
SYNCHRONISIERUNGSVORRICHTUNG, ENTPRECHENDER FLUGZEITSENSOR UND ENTSPRECHENDES VERFAHREN
SYNCHRONISATION DEVICE, ASSOCIATED FLIGHT TIME SENSOR AND METHOD

(30) Priorité: 17.02.2020 FR 2001538
(43) Date de publication de la demande: 18.08.2021
(73) Titulaire: STMICROELECTRONICS (GRENOBLE 2) SAS, 38000 Grenoble (FR)
(72) Inventeur: TUBERT, Cédric, 38120 SAINT EGREVE (FR)
(74) Mandataire: Casalonga

(56) Documents cités:
- US-A1- 2018 321 360

## Description

Des modes de réalisation et de mise en œuvre de l'invention concernent la synchronisation de l'émission et de la réception d'un signal lumineux pour des capteurs, et plus particulièrement pour des capteurs de temps de vol (« Time of Flight » en langue anglaise) mesurant des scènes tridimensionnelles.

Un capteur de temps de vol comprend un dispositif d'émission d'un signal lumineux, généralement un laser, et un dispositif de réception du signal émis réfléchi sur un obstacle, le dispositif de réception comprenant une matrice de pixels.

Le signal réfléchi traité par le dispositif de réception permet de déterminer la distance séparant l'obstacle du capteur.

Par exemple , le document US 2018/321360 Al concerne des systèmes pour effectuer des mesures LIDAR tridimensionnelles au moyen d'un dispositif de mesure LIDAR intégré. Selon un mode de réalisation, un récepteur de signal de retour génère un signal de déclenchement d'impulsion qui déclenche la génération d'une impulsion de lumière d'éclairage et l'acquisition de données d'un signal de retour, et déclenche également le calcul de temps de vol par conversion temps-numérique. En outre, le récepteur de signal de retour estime également la largeur et l'amplitude de crête de chaque impulsion de retour, et échantillonne chaque forme d'onde d'impulsion de retour individuellement sur une fenêtre d'échantillonnage qui comprend l'amplitude de crête de chaque forme d'onde d'impulsion de retour.

Généralement, le dispositif d'émission et le dispositif de réception sont éloignés l'un de l'autre de sorte que l'émission du signal lumineux et la réception du signal lumineux réfléchi sont désynchronisées entraînant une erreur dans la détermination de la distance mesurée, le dispositif de réception émettant généralement un signal de commande du dispositif d'émission.

De plus, comme les dispositifs d'émission et de réception sont éloignés l'un de l'autre, les dits dispositifs peuvent être soumis à des variations de températures différentes entraînant des comportements différents de leurs composants internes, notamment des portes logiques, de sorte que les durées de propagation de signaux à travers les portes logiques désynchronisent encore plus l'émission du signal lumineux et la réception du signal lumineux réfléchi.

Pour synchroniser l'émission du signal lumineux et la réception du signal lumineux réfléchi, le capteur de temps de vol comprend une deuxième matrice de pixels pour déterminer une valeur de référence.

Cependant, l'implantation de la deuxième matrice de référence requiert de la surface de silicium supplémentaire et requiert une barrière optique configurée pour empêcher que le rayon lumineux soit réfléchi à la fois par la matrice de pixels et la deuxième matrice de pixels, la barrière optique nécessitant encore plus de surface de silicium.

Une autre solution pour synchroniser les dispositifs d'émission et de réception consiste à mettre en œuvre des tables de calibration pour corriger les valeurs de distance mesurées.

Cependant, l'utilisation de tables de calibration dégrade la qualité des valeurs de distance fournies par le capteur.

Le capteur peut comprendre une boucle de retour reliant les dispositifs d'émission et de réception, la boucle de retour délivrant un signal de retour comportant la durée de propagation du signal de commande à travers le dispositif d'émission.

Cependant, la génération du signal de retour requiert la mise en œuvre des composants supplémentaires complexifiant le capteur.

Il existe un besoin d'améliorer la synchronisation des dispositifs d'émission et de réception d'un capteur de temps de vol.

Selon des modes de réalisation et de mises en œuvre, il est avantageusement proposé de synchroniser l'émission et la réception d'un signal lumineux pour un capteur de temps de vol en pilotant le dispositif d'émission du signal lumineux à partir du signal de synchronisation élaboré à partir d'un signal de commande du dispositif de réception de sorte que la durée d'élaboration et de transmission du signal de synchronisation à partir du signal de commande et la durée de génération et de transmission d'un signal de puissance pour alimenter la matrice de pixels du dispositif de réception à partir du signal de commande soient identiques.

Selon un aspect, il est proposé un procédé de synchronisation de l'émission et de la réception d'un signal lumineux pour un capteur de temps de vol comprenant :
- la génération d'un signal de puissance à partir d'un signal de commande du capteur, le signal de puissance étant configuré pour alimenter une matrice de pixels du capteur,
- la transmission d'un signal de synchronisation à un dispositif d'émission du signal lumineux, le signal de synchronisation étant élaboré à partir du signal de commande de sorte que la durée d'élaboration et de transmission du signal de synchronisation à partir du signal de commande et la durée de génération et de transmission du signal de puissance à partir du signal de commande soient identiques.

Le procédé comprend en outre la commande d'un moyen de commutation du dispositif d'émission du signal lumineux à partir du signal de synchronisation, le moyen de commutation étant configuré pour alimenter une source lumineuse du dispositif d'émission du signal lumineux.

Avantageusement, le signal de synchronisation permet de commander le moyen de commutation de manière à synchroniser l'émission du signal lumineux et la réception du signal lumineux réfléchi, le signal de synchronisation étant élaboré par le dispositif de réception.

Selon un mode de mise en œuvre, lequel la commande du moyen de commutation comprend la génération d'un signal de conduction du moyen de commutation à partir du signal de synchronisation et d'un signal d'alimentation en puissance de la source lumineuse de sorte que le signal d'alimentation en puissance soit synchronisé avec le signal de synchronisation.

Selon un autre mode de mise en œuvre, la génération du signal de synchronisation comprend la génération d'un signal de synchronisation modifié à partir du signal de commande de manière à imposer un cycle de conduction du moyen de commutation, la commande du moyen de commutation comprenant la génération d'un signal de conduction du moyen de commutation à partir du signal de synchronisation modifié et d'un signal d'alimentation en puissance de la source lumineuse de sorte que le signal d'alimentation en puissance soit synchronisé avec le signal de synchronisation en suivant le cycle de conduction imposé.

Selon un autre aspect, il est proposé un dispositif de synchronisation de l'émission et de la réception d'un signal lumineux pour un capteur de temps de vol comprenant un circuit de commande de puissance configuré pour générer et transmettre un signal de puissance à partir d'un signal de commande du capteur, le signal de puissance étant configuré pour alimenter une matrice de pixels du capteur, un module d'élaboration d'un signal de synchronisation configuré pour élaborer le signal de synchronisation à partir du signal de commande et un moyen de commutation configuré pour alimenter une source lumineuse d'un dispositif d'émission du signal lumineux, le module d'élaboration étant en outre configuré pour transmettre le signal de synchronisation au moyen de commutation de sorte que la durée d'élaboration et de transmission du signal de synchronisation et la durée de génération et de transmission du signal de puissance soient identiques.

Le dispositif permet de synchroniser l'émission du signal et la réception d'une partie du signal lumineux réfléchi.

Selon un mode de réalisation, le module d'élaboration comprend une première boucle à verrouillage de retard et une interface de communication reliée à la boucle de verrouillage de retard, la boucle de verrouillage de retard étant configurée pour élaborer le signal de synchronisation à partir du signal de commande et l'interface étant configurée pour transmettre le signal de synchronisation au moyen de commutation de sorte que la durée d'élaboration et de transmission du signal de synchronisation et la durée de génération et de transmission du signal de puissance soient identiques.

L'utilisation de la deuxième boucle de verrouillage permet de verrouiller la phase du moyen de commutation.

Selon un autre mode de réalisation, le dispositif comprend en outre un module de correction relié entre le module d'élaboration et le moyen de commutation, le module de correction étant configuré pour générer un signal de conduction du moyen de commutation à partir du signal de synchronisation et d'un signal d'alimentation en puissance de la source lumineuse de sorte que le signal d'alimentation en puissance soit synchronisé avec le signal de synchronisation.

Selon encore un autre mode de réalisation, le module de correction comprend une deuxième boucle de verrouillage de retard configurée pour générer le signal de conduction du moyen de commutation à partir du signal de synchronisation et du signal d'alimentation en puissance de la source lumineuse de sorte que le signal d'alimentation en puissance soit synchronisé avec le signal de synchronisation.

L'utilisation de la deuxième boucle de verrouillage et du correcteur de cycle permet de verrouiller la phase et le cycle de travail du moyen de commutation.

Selon encore un autre mode de réalisation, le module d'élaboration comprend en outre un correcteur de cycles relié entre la première boucle de verrouillage de retard et l'interface, le correcteur de cycle étant configuré pour générer un signal de synchronisation modifié à partir du signal de synchronisation de manière à imposer un cycle de conduction du moyen de commutation, la deuxième boucle de verrouillage de retard étant en outre configurée pour générer le signal de conduction du moyen de commutation à partir du signal de synchronisation modifié et du signal d'alimentation en puissance de la source lumineuse de sorte que le signal d'alimentation en puissance soit synchronisé avec le signal de synchronisation en suivant le cycle de conduction imposé, le signal de synchronisation étant équivalent au signal de synchronisation modifié.

Selon encore un autre aspect, il est proposé un capteur de temps de vol comprenant un dispositif de synchronisation de l'émission et de la réception d'un signal lumineux tel que défini précédemment.

D'autres avantages et caractéristiques de l'invention apparaîtront à l'examen de la description détaillée de modes de réalisation, nullement limitatifs, et des dessins annexés sur lesquels :
[Fig 1]
[Fig 2]
[Fig 3]

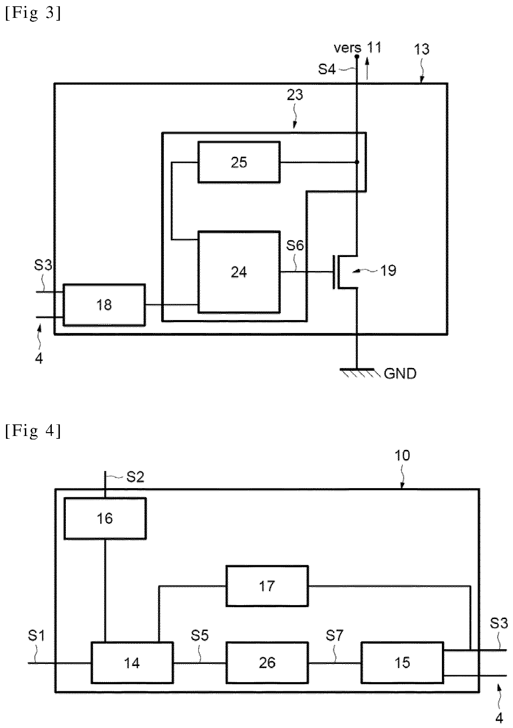

[Fig 4] illustrent des modes de réalisation et de mise en œuvre de l'invention.

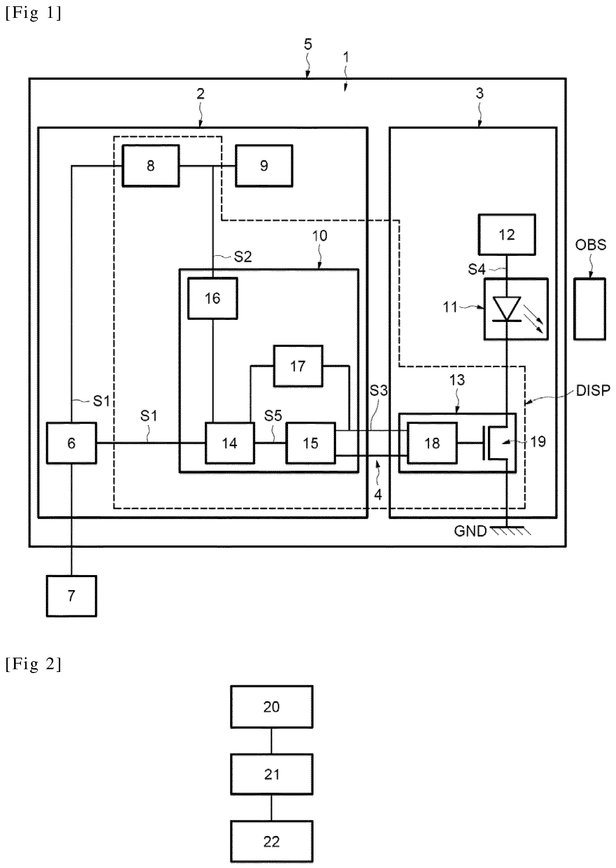

On se réfère à la figure 1 qui représente un exemple d'un premier mode de réalisation d'un capteur de temps de vol 1 comprenant un dispositif de réception d'un signal lumineux 2 et un dispositif d'émission du signal lumineux 3 reliés entre eux par exemple par une liaison filaire 4.

Le capteur de temps de vol 1 est intégré par exemple dans un téléphone mobile 5.

Le dispositif de réception d'un signal lumineux 2 pilote le dispositif d'émission 3 par l'intermédiaire de la liaison 4.

Le dispositif de réception 2 comprend un module de commande 6 générant un signal S1 de commande du capteur par exemple à partir d'instructions générées par une unité de traitement 7 du téléphone 5, un circuit de commande de puissance 8 générant et transmettant un signal de puissance S2 à partir du signal de commande S1 du capteur 1, une matrice de pixels 9 alimentée par le signal de puissance S2 et recevant un signal lumineux, et un module d'élaboration 10 d'un signal de synchronisation.

Le module d'élaboration 10 élabore un signal S3 de synchronisation à partir du signal de commande S1, le signal S3 de synchronisation transitant vers le dispositif d'émission 5 par la liaison 4.

Le dispositif d'émission 3 comprend une source lumineuse 11, par exemple une diode électroluminescente émettant un faisceau laser, un module de pilotage 12 de la source 11 et un module de commutation 13 alimentant la source lumineuse 11, ledit module comportant un moyen de commutation 19.

Le faisceau laser est configuré pour illuminer un obstacle OBS, la partie du faisceau réfléchi par l'obstacle OBS étant captée par la matrice de pixels 9.

La source lumineuse 11 est reliée d'une part au module de pilotage 12 et, d'autre part, au module de commutation 13 de sorte qu'indépendamment des signaux d'alimentation en puissance S4 émis par le module de pilotage 12, la source lumineuse 11 est désactivée ou activée suivant l'état du moyen de commutation 19 du module de commutation 13.

Le circuit de commande de puissance 8, le module d'élaboration 10 d'un signal de synchronisation et le module de commutation 13 sont incorporés dans un dispositif DISP de synchronisation de l'émission et de la réception d'un signal lumineux du capteur 1 de temps de vol.

Le dispositif DISP permet de synchroniser l'émission du signal et la réception d'une partie du signal lumineux réfléchi.

Le module d'élaboration 10 comprend une première boucle à verrouillage de retard 14 et une interface de communication 15 reliée à la boucle de verrouillage de retard 14.

L'interface de communication 15 est par exemple du type LVDS (« Low Voltage Differential Signal» en anglais) recevant en entrée un signal digital et émettant en sortie un signal analogique dont le contenu est identique au signal numérique reçu en entrée.

La boucle de verrouillage de retard 14 est configurée pour élaborer le signal de synchronisation S3 à partir du signal de commande S1.

Le module d'élaboration 10 comprend en outre un premier translateur de tension 16 et un deuxième translateur de tension 17 configurés pour transformer un signal analogique en un signal binaire.

Les deux translateurs de tension 16 et 17 sont identiques de sorte que la durée d'élaboration et de transmission d'un signal analogique en un signal binaire est identique.

En variante, les translateurs de tension 16 et 17 peuvent être du type différentiel.

Le premier translateur de tension 16 reçoit en entrée le signal de puissance S2 et délivre à la boucle de verrouillage 14 un signal binaire représentatif du signal de puissance S2, et le deuxième translateur de tension 17 reçoit en entrée le signal de synchronisation S3 et délivre à la boucle de verrouillage 14 un signal binaire représentatif du signal de synchronisation S3.

La boucle de verrouillage de retard 14 est configurée pour élaborer le signal de synchronisation S3 à partir du signal de commande S1 et l'interface 15 est configurée pour transmettre le signal de synchronisation S3 au module de commutation 13 de sorte que la durée d'élaboration et de transmission du signal de synchronisation S3 et la durée de génération et de transmission du signal de puissance S2 sont identiques.

Le module de commutation 13 peut par exemple comprendre une interface de communication 18, ici du type LVDS, recevant le signal S3 émis par l'interface 15, l'interface de communication 18 étant reliée au moyen de commutation 19 comprenant par exemple un transistor du type MOS.

La grille du transistor MOS est reliée à l'interface 18, la source lumineuse 11 étant reliée à une masse GND du dispositif 3 par l'intermédiaire du drain et de la source du transistor MOS.

La figure 2 illustre un exemple de mise en œuvre du dispositif DISP.

On suppose que le module de commande 6 délivre le signal S1 de commande.

Durant une étape 20, le circuit de commande de puissance 8 génère le signal de puissance S2 à partir du signal de commande S1, la matrice de pixels 9 étant alimentée.

Puis, durant une étape 21, la boucle de verrouillage de retard 14 génère un signal de synchronisation intermédiaire S5 digital, dont le contenu est identique au signal de synchronisation analogique S3, à partir du signal de commande S1, du signal de puissance S2 et du signal de synchronisation S3, de sorte que la durée d'élaboration et de transmission du signal de synchronisation S3 à partir du signal de commande S1 et la durée de génération et de transmission du signal de puissance S2 à partir du signal de commande S1 soient identiques.

Durant une étape 22, le transistor 19 est piloté par le signal S3 de sorte que la source lumineuse 11 émet un faisceau laser, la partie du faisceau réfléchi sur l'obstacle OBS étant captée par la matrice 9.

La matrice 9 et la source lumineuse 11 fonctionnent de manière quasi-synchrone de sorte que la mesure de distance entre le capteur 1 et l'obstacle OBS n'est pas faussée.

Dans ce qui suit, des éléments identiques sont désignés par des même références numériques.

La figure 3 illustre un deuxième exemple de mode de réalisation du module de commutation 13.

Ce mode de réalisation du module de commutation 13 diffère du premier mode de réalisation du module de commutation 13 illustré à la figure 1 en ce que le module de commutation 13 comprend en outre un module de correction 23 relié entre le module d'élaboration 10 et le moyen de commutation 19.

Le module de correction 23 est configuré pour générer un signal de conduction S6 du moyen de commutation 19 à partir du signal de synchronisation S3 et du signal d'alimentation en puissance S4 de la source lumineuse 11 de sorte que le signal d'alimentation en puissance S4 soit synchronisé avec le signal de synchronisation S3.

Le module de correction 23 comprend une deuxième boucle de verrouillage de retard 24 configurée pour générer le signal de conduction S6 du moyen de commutation 19 à partir du signal de synchronisation S3 et du signal d'alimentation en puissance S4 sorte que le signal d'alimentation en puissance S4 soit synchronisé avec le signal de synchronisation S3.

Le module de correction comprend en outre un translateur de tension 25 transmettant le signal de puissance S4 sur une première entrée de la deuxième boucle de retard 24, l'interface 18 transmettant le signal de synchronisation S3 sur une deuxième entrée de la deuxième boucle 24.

L'utilisation de la deuxième boucle de verrouillage 24 permet de verrouiller la phase du moyen de commutation 19.

La figure 4 illustre un exemple d'un deuxième mode de réalisation du module d'élaboration 10.

Le deuxième mode de réalisation du module d'élaboration 10 coopère avec le deuxième mode de réalisation du module de commutation illustré à la figure 3.

Le deuxième mode de réalisation du module d'élaboration 10 diffère du premier mode de réalisation du module d'élaboration 10 illustré à la figure 1 en ce qu'il comprend en outre un correcteur de cycles 26 relié entre la première boucle de verrouillage de retard 14 et l'interface 15.

Le correcteur de cycle 26 généré un signal de synchronisation modifié S7 à partir du signal de synchronisation intermédiaire S5 de manière à imposer un cycle de conduction au moyen de commutation 19.

La deuxième boucle de verrouillage retard 24 génère le signal de conduction S6 du moyen de commutation 19 à partir du signal de synchronisation modifié S7 et du signal d'alimentation en puissance S4 de la source lumineuse 11 de sorte que le signal d'alimentation en puissance S4 soit synchronisé avec le signal de synchronisation S3 en suivant le cycle de conduction imposé, le signal de synchronisation S3 étant équivalent au signal de synchronisation modifié S7.

L'utilisation de la deuxième boucle de verrouillage 24 et du correcteur de cycle 26 permet de verrouiller la phase et le cycle de travail du moyen de commutation 19.

## Revendications

1. Procédé de synchronisation de l'émission et de la réception d'un signal lumineux pour un capteur (1) de temps de vol comprenant la génération d'un signal de puissance (S2) à partir d'un signal de commande (S1) du capteur, le signal de puissance étant configuré pour alimenter une matrice de pixels (9) du capteur, la transmission d'un signal de synchronisation (S3) à un dispositif d'émission (3) du signal lumineux, le signal de synchronisation étant élaboré à partir du signal de commande de sorte que la durée d'élaboration et de transmission du signal de synchronisation à partir du signal de commande et la durée de génération et de transmission du signal de puissance à partir du signal de commande soient identiques, le procédé comprenant en outre la commande d'un moyen de commutation (19) du dispositif d'émission du signal lumineux à partir du signal de synchronisation, le moyen de commutation étant configuré pour alimenter une source lumineuse (11) du dispositif d'émission du signal lumineux.

2. Procédé selon la revendication 1, dans lequel la commande du moyen de commutation (19) comprend la génération d'un signal de conduction (S6) du moyen de commutation à partir du signal de synchronisation (S3) et d'un signal d'alimentation en puissance (S4) de la source lumineuse (11) de sorte que le signal d'alimentation en puissance soit synchronisé avec le signal de synchronisation.

3. Procédé selon la revendication 1, dans lequel la génération du signal de synchronisation (S3) comprend la génération d'un signal de synchronisation modifié (S7) à partir du signal de commande (S1) de manière à imposer un cycle de conduction du moyen de commutation (19), la commande du moyen de commutation comprenant la génération d'un signal de conduction (S6) du moyen de commutation (19) à partir du signal de synchronisation modifié et d'un signal d'alimentation en puissance (S4) de la source lumineuse (11) de sorte que le signal d'alimentation en puissance (S4) soit synchronisé avec le signal de synchronisation en suivant le cycle de conduction imposé.

4. Dispositif (DISP) de synchronisation de l'émission et de la réception d'un signal lumineux pour un capteur (1) de temps de vol comprenant un circuit de commande de puissance (8) configuré pour générer et transmettre un signal de puissance (S2) à partir d'un signal de commande (S1) du capteur, le signal de puissance étant configuré pour alimenter une matrice de pixels (9) du capteur, un module d'élaboration (10) d'un signal de synchronisation configuré pour élaborer le signal de synchronisation (S3) à partir du signal de commande et un moyen de commutation (19) configuré pour alimenter une source lumineuse (11) d'un dispositif d'émission (3) du signal lumineux, le module d'élaboration étant en outre configuré pour transmettre le signal de synchronisation au moyen de commutation de sorte que la durée d'élaboration et de transmission du signal de synchronisation et la durée de génération et de transmission du signal de puissance soient identiques.

5. Dispositif selon la revendication 4, dans lequel le module d'élaboration (10) comprend une première boucle à verrouillage de retard (14) et une interface de communication (15) reliée à la boucle de verrouillage de retard, la boucle de verrouillage de retard étant configurée pour élaborer le signal de synchronisation (S3) à partir du signal de commande (S1) et l'interface étant configurée pour transmettre le signal de synchronisation au moyen de commutation (19) de sorte que la durée d'élaboration et de transmission du signal de synchronisation et la durée de génération et de transmission du signal de puissance soient identiques.

6. Dispositif selon la revendication 5, comprenant en outre un module de correction (23) relié entre le module d'élaboration (10) et le moyen de commutation (19), le module de correction étant configuré pour générer un signal de conduction (S6) du moyen de commutation à partir du signal de synchronisation (S3) et d'un signal d'alimentation en puissance (S4) de la source lumineuse (11) de sorte que le signal d'alimentation en puissance soit synchronisé avec le signal de synchronisation.

7. Dispositif selon la revendication 6, dans lequel le module de correction (23) comprend une deuxième boucle de verrouillage de retard (24) configurée pour générer le signal de conduction (S6) du moyen de commutation à partir du signal de synchronisation (S3) et du signal d'alimentation en puissance (S4) de la source lumineuse (11) de sorte que le signal d'alimentation en puissance soit synchronisé avec le signal de synchronisation.

8. Dispositif selon la revendication 7, dans lequel le module d'élaboration (10) comprend en outre un correcteur de cycles (26) relié entre la première boucle de verrouillage de retard (14) et l'interface (15), le correcteur de cycle étant configuré pour générer un signal de synchronisation modifié (S7) à partir du signal de synchronisation de manière à imposer un cycle de conduction du moyen de commutation (19), la deuxième boucle de verrouillage de retard étant en outre configurée pour générer le signal de conduction du moyen de commutation à partir du signal de synchronisation modifié et du signal d'alimentation en puissance (S4) de la source lumineuse de sorte que le signal d'alimentation en puissance soit synchronisé avec le signal de synchronisation en suivant le cycle de conduction imposé, le signal de synchronisation (S3) étant équivalent au signal de synchronisation modifié (S7).

9. Capteur de temps de vol comprenant un dispositif de synchronisation de l'émission et de la réception d'un signal lumineux (DISP) selon l'une quelconque des revendications 4 à 8.

## Patentansprüche

1. Verfahren zum Synchronisieren des Sendens und Empfangens eines Lichtsignals für einen Flugzeitsensor (1), umfassend das Erzeugen eines Leistungssignals (S2) ausgehend von einem Steuersignal (S1) des Sensors, wobei das Leistungssignal so eingerichtet ist, dass es eine Pixelmatrix (9) des Sensors mit Strom versorgt, das Übertragen eines Synchronisationssignals (S3) an eine Sendevorrichtung (3) für das Lichtsignal, wobei das Synchronisationssignal ausgehend von dem Steuersignal so hergestellt wird, dass die Dauer des Herstellens und Übertragens des Synchronisationssignals ausgehend von dem Steuersignal und die Dauer des Erzeugens und Übertragens des Leistungssignals ausgehend von dem Steuersignal identisch sind, wobei das Verfahren ferner das Steuern eines Schaltmittels (19) der Sendevorrichtung für das Lichtsignal ausgehend von dem Synchronisationssignal umfasst, wobei das Schaltmittel so eingerichtet ist, dass es eine Lichtquelle (11) der Sendevorrichtung für das Lichtsignal mit Strom versorgt.

2. Verfahren nach Anspruch 1, wobei das Steuern des Schaltmittels (19) das Erzeugen eines Leitsignals (S6) des Schaltmittels ausgehend von dem Synchronisationssignal (S3) und einem Stromversorgungssignal (S4) der Lichtquelle (11) umfasst, so dass das Stromversorgungssignal mit dem Synchronisationssignal synchronisiert ist.

3. Verfahren nach Anspruch 1, wobei das Erzeugen des Synchronisationssignals (S3) das Erzeugen eines modifizierten Synchronisationssignals (S7) ausgehend von dem Steuersignal (S1) umfasst, um einen Leitungszyklus des Schaltmittels (19) aufzuerlegen, wobei das Steuern des Schaltmittels das Erzeugen eines Leitsignals (S6) des Schaltmittels (19) ausgehend von dem modifizierten Synchronisationssignal und einem Stromversorgungssignal (S4) der Lichtquelle (11) umfasst, so dass das Stromversorgungssignal (S4) mit dem Synchronisationssignal gemäß dem auferlegten Leitungszyklus synchronisiert wird.

4. Vorrichtung (DISP) zum Synchronisieren des Sendens und Empfangens eines Lichtsignals für einen Flugzeitsensor (1), umfassend eine Leistungssteuerschaltung (8), die so eingerichtet ist, dass sie ein Leistungssignal (S2) ausgehend von einem Steuersignal (S1) des Sensors erzeugt und überträgt, wobei das Leistungssignal so eingerichtet ist, dass es eine Pixelmatrix (9) des Sensors mit Strom versorgt, ein Modul (10) zum Herstellen eines Synchronisationssignals, das so eingerichtet ist, dass es das Synchronisationssignal (S3) ausgehend von dem Steuersignal herstellt, und ein Schaltmittel (19), das so eingerichtet ist, dass es eine Lichtquelle (11) einer Sendevorrichtung (3) für das Lichtsignal mit Strom versorgt, wobei das Herstellungsmodul ferner so eingerichtet ist, dass es das Synchronisationssignal an das Schaltmittel überträgt, so dass die Dauer des Herstellens und Übertragens des Synchronisationssignals und die Dauer des Erzeugens und Übertragens des Leistungssignals identisch sind.

5. Vorrichtung nach Anspruch 4, wobei das Herstellungsmodul (10) eine erste Verzögerungsverriegelungsschleife (14) und eine mit der Verzögerungsverriegelungsschleife verbundene Kommunikationsschnittstelle (15) umfasst, wobei die Verzögerungsverriegelungsschleife so eingerichtet ist, dass sie das Synchronisationssignal (S3) ausgehend von dem Steuersignal (S1) herstellt, und die Schnittstelle so eingerichtet ist, dass sie das Synchronisationssignal an das Schaltmittel (19) überträgt, so dass die Dauer des Herstellens und Übertragens des Synchronisationssignals und die Dauer des Erzeugens und Übertragens des Leistungssignals identisch sind.

6. Vorrichtung nach Anspruch 5, ferner umfassend ein Korrekturmodul (23), das zwischen dem Herstellungsmodul (10) und dem Schaltmittel (19) verbunden ist, wobei das Korrekturmodul so eingerichtet ist, dass es ein Leitungssignal (S6) des Schaltmittels ausgehend von dem Synchronisationssignal (S3) und einem Stromversorgungssignal (S4) der Lichtquelle (11) erzeugt, so dass das Stromversorgungssignal mit dem Synchronisationssignal synchronisiert wird.

7. Vorrichtung nach Anspruch 6, wobei das Korrekturmodul (23) eine zweite Verzögerungsverriegelungsschleife (24) umfasst, die so eingerichtet ist, dass sie das Leitungssignal (S6) des Schaltmittels ausgehend von dem Synchronisationssignal (S3) und dem Stromversorgungssignal (S4) der Lichtquelle (11) erzeugt, so dass das Stromversorgungssignal mit dem Synchronisationssignal synchronisiert wird.

8. Vorrichtung nach Anspruch 7, wobei das Herstellungsmodul (10) ferner einen Zykluskorrektor (26) umfasst, der zwischen der ersten Verzögerungsverriegelungsschleife (14) und der Schnittstelle (15) verbunden ist, wobei der Zykluskorrektor so eingerichtet ist, dass er ein modifiziertes Synchronisationssignal (S7) ausgehend von dem Synchronisationssignal erzeugt, um einen Leitungszyklus des Schaltmittels (19) aufzuerlegen, wobei die zweite Verzögerungsverriegelungsschleife ferner so eingerichtet ist, dass sie das Leitungssignal des Schaltmittels ausgehend von dem modifizierten Synchronisationssignal und dem Stromversorgungssignal (S4) der Lichtquelle erzeugt, so dass das Stromversorgungssignal mit dem Synchronisationssignal gemäß dem auferlegten Leitungszyklus synchronisiert wird, wobei das Synchronisationssignal (S3) dem modifizierten Synchronisationssignal (S7) entspricht.

9. Flugzeitsensor, umfassend eine Vorrichtung zum Synchronisieren des Sendens und Empfangens eines Lichtsignals (DISP) nach einem der Ansprüche 4 bis 8.

## Claims

1. A method for synchronising the emission and reception of a light signal for a time-of-flight sensor (1) comprising generating a power signal (S2) from a control signal (S1) of the sensor, the power signal being configured to supply a pixel array (9) of the sensor, transmitting a synchronisation signal (S3) to a device (3) for emitting the light signal, the synchronisation signal being developed from the control signal so that the duration of developing and transmitting the synchronisation signal from the control signal and the duration of generating and transmitting the power signal from the control signal are identical, the method further comprising controlling means (19) for switching the device for emitting the light signal from the synchronisation signal, the switching means being configured to supply a light source (11) of the light signal emitting device.

2. The method according to claim 1, wherein the control of the switching means (19) comprises generating a conduction signal (S6) of the switching means from the synchronisation signal (S3) and a power supply signal (S4) of the light source (11) such that the power supply signal is synchronised with the synchronisation signal.

3. The method according to claim 1, wherein generating the synchronisation signal (S3) comprises generating a modified synchronisation signal (S7) from the control signal (S1) so as to impose a conduction cycle of the switching means (19), controlling the switching means comprising generating a conduction signal (S6) of the switching means (19) from the modified synchronisation signal and a power supply signal (S4) of the light source (11) such that the power supply signal (S4) is synchronised with the synchronisation signal by following the imposed conduction cycle.

4. A device (DISP) for synchronising the emission and reception of a light signal for a time-of-flight sensor (1) comprising a power control circuit (8) configured to generate and transmit a power signal (S2) from a control signal (S1) of the sensor, the power signal being configured to supply a pixel array (9) of the sensor, a module (10) for developing a synchronisation signal configured to develop the synchronisation signal (S3) from the control signal and a switching means (19) configured to supply a light source (11) of a device for emitting (3) the light signal, the developing module being further configured to transmit the synchronisation signal by switching means so that the duration of developing and transmitting the synchronisation signal and the duration of generating and transmitting the power signal are identical.

5. The device according to claim 4, wherein the development module (10) comprises a first delay-locked loop (14) and a communication interface (15) connected to the delay-locked loop, the delay-locked loop being configured to elaborate the synchronisation signal (S3) from the control signal (S1) and the interface being configured to transmit the synchronisation signal by switching means (19) such that the duration of the development and transmission of the synchronisation signal and the duration of the generation and transmission of the power signal are identical.

6. The device according to claim 5, further comprising a correction module (23) connected between the development module (10) and the switching means (19), the correction module being configured to generate a conduction signal (S6) of the switching means from the synchronisation signal (S3) and a power supply signal (S4) of the light source (11) such that the power supply signal is synchronised with the synchronisation signal.

7. The device according to claim 6, wherein the correction module (23) comprises a second delay-locked loop (24) configured to generate the conduction signal (S6) of the switching means from the synchronisation signal (S3) and the power supply signal (S4) of the light source (11) such that the power supply signal is synchronised with the synchronisation signal.

8. The device according to claim 7, wherein the development module (10) further comprises a cycle corrector (26) connected between the first delay-locked loop (14) and the interface (15), the cycle corrector being configured to generate a modified synchronisation signal (S7) from the synchronisation signal so as to impose a conduction cycle of the switching means (19), the second delay-locked loop being further configured to generate the conduction signal of the switching means from the modified synchronisation signal and the power supply signal (S4) of the light source such that the power supply signal is synchronised with the synchronisation signal by following the imposed conduction cycle, the synchronisation signal (S3) being equivalent to the modified synchronisation signal (S7).

9. A time-of-flight sensor comprising a device for synchronising the emission and reception of a light signal (DISP) according to any one of claims 4 to 8.
